# FASCICULE DE BREVET EUROPEEN

(11) **EP 3 010 674 B1**
(45) Date de publication et mention de la délivrance du brevet: **25.03.2020**
(21) Numéro de dépôt: 14735612.5
(22) Date de dépôt: 12.06.2014
(51) Int. Cl.: B23B 29/02, F16F 7/104, B23C 5/00, B23B 27/00, F16F 7/108, B23D 23/00

(54) **ELEMENT AXIAL MOBILE POUR SYSTEME D'AMORTISSEMENT D'OUTIL ROTATIF**
BEWEGLICHES AXIALES ELEMENT FÜR EIN DÄMPFUNGSSYSTEM EINES ROTATIONSWERKZEUGS
MOVABLE AXIAL ELEMENT FOR A ROTARY TOOL DAMPENING SYSTEM

(30) Priorité: 20.06.2013 FR 1355861
(43) Date de publication de la demande: 27.04.2016
(73) Titulaire: SECO-E.P.B. (Société par Actions Simplifiée), 67330 Bouxwiller (FR)
(72) Inventeur: FREYERMUTH, Alain, F-67350 Pfaffenhoffen (FR); GROLL, Yannick, F-67370 Reitwiller (FR); KRUMHORN, Pascal, F-67350 Dauendorf (FR); OSTERMANN, Mathieu, F-67310 Allenwiller (FR)
(74) Mandataire: Cabinet Nuss
(86) Numéro de dépôt international: PCT/FR2014/051422
(87) Numéro de publication internationale: WO 2014/202869

(56) Documents cités:
- EP-A1- 2 108 473
- DE-U- 1 897 206
- US-A- 5 413 318
- US-A1- 2005 258 580
- US-B1- 6 443 673

## Description

La présente invention se rapporte au domaine des amortisseurs pour appareils et outillages et plus particulièrement au domaine des amortisseurs réglables pour appareils et outillages de coupe et de perçage.

Le montage d'outils sur une interface adaptée d'appareil moteur fait souvent intervenir une pièce intermédiaire destinée à limiter les vibrations de l'appareil et de l'outil en mouvement. Dans le cas d'un outil qui fonctionne en rotation, par exemple un outil de coupe ou de perçage, des vibrations peuvent apparaître du fait de la résistance rencontrée par l'outil de coupe en contact avec la matière de la pièce coupée. Ces vibrations radiales viennent alors parasiter le mouvement de rotation de la pièce coupée par rapport à son axe de rotation. L'amortisseur intermédiaire permet alors de compenser, voire d'annuler, les vibrations radiales qui peuvent être produites par l'outil en rotation.

Classiquement, cet amortisseur intermédiaire est formé par une pièce cylindrique qui réalise un logement dans lequel se trouve disposée une masse absorbante cylindrique centrée dans le logement et maintenue en position par des éléments élastiques disposés sur la périphérie de la masse cylindrique, en contact avec la paroi interne du logement cylindrique. Cette masse absorbante a pour fonction de vibrer en décalage de phase par rapport à la pièce cylindrique de son logement et ainsi amortir les vibrations radiales générées par la coupe et notamment par la résistance rencontrée par l'outil de coupe. L'ensemble amortisseur/masse cylindrique est alors arrangé pour être aligné selon l'axe de rotation de la machine et de l'outil. Les différents éléments élastiques permettent un amortissement des mouvements de vibration de la masse absorbante par rapport à la pièce cylindrique du logement. Cet amortissement peut être régulé en modifiant la dureté élastique des éléments élastiques et en les pré-contraignant. Lorsque le couple raideur des éléments élastiques / masse absorbante n'est pas adapté, la masse absorbante cylindrique vibre de façon aléatoire et ne joue alors plus son rôle d'amortisseur.

Un exemple de réalisation de système amortisseur intermédiaire intégrant un mécanisme de précontrainte est présenté dans la publication US 6,443,673. Dans un tel système, la masse absorbante est comprimée entre deux élastomères dans le logement cylindrique de l'amortisseur par l'intermédiaire d'un élément de serrage. Cette élément de serrage forme une partie du logement cylindrique de l'amortisseur et réalise une rampe de serrage des élastomères montée désaxée par rapport à l'axe de l'amortisseur. Si un tel dispositif permet d'obtenir un système d'amortissement dont les capacités d'amortissement sont réglables, ce dispositif présente toutefois comme inconvénient de ne pas pouvoir être intégré à des pièces cylindriques de logement déjà existantes.

Le document DE 1897206 U divulgue un élément axial mobile selon le préambule de la revendication 1 et plus particulièrement il propose une alternative de réalisation du réglage de l'amortissement grâce à un mécanisme de contrainte des élastomères montés sur la masse absorbante. Dans ce mode de réalisation, les élastomères sont positionnés dans des épaulements situés aux extrémités de la masse absorbante et dont les volumes sont réduits par rapport aux élastomères qui s'y positionnent. Le mécanisme de contrainte fait alors intervenir un disque monté à proximité de l'épaulement pour permettre, lors du déplacement du disque vers l'épaulement, la mise en pression de la partie de l'élastomère qui dépasse de l'épaulement. Cependant, un tel système présente comme défauts, non seulement, de générer une contrainte parasite en torsion ou cisaillement du disque contre l'élastomère, mais également, d'une part, d'imposer un positionnement des élastomères aux extrémités de la masse absorbante et, d'autre part, de réaliser un pincement parasite de l'élastomère qui diminue l'efficacité de la compression. Ce pincement parasite concerne la partie de l'élastomère qui dépasse de l'épaulement et qui se trouve facilement pincée entre le disque et l'extrémité de la masse absorbante.

La présente invention a notamment pour but de pallier ces inconvénient en proposant un dispositif d'amortissement dont l'amortissement est réglable et susceptible d'être monté ou intégré dans des pièces de logement existantes, tout en assurant une contrainte ou une précontrainte optimisée, efficacement réglée et contrôlée d'un ou de plusieurs éléments élastomères.

L'invention a ainsi pour objet un élément axial mobile défini dans la revendication 1.

L'invention a également pour objet un système d'amortissement de vibrations radiales pour outil de tournage, de perçage, de fraisage ou d'usinage monté sur machine, outil mobile en rotation par rapport à la pièce usinée, le système comportant un cylindre creux formant un logement axial, caractérisé en ce que le système intègre dans son logement un élément axial mobile selon l'invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

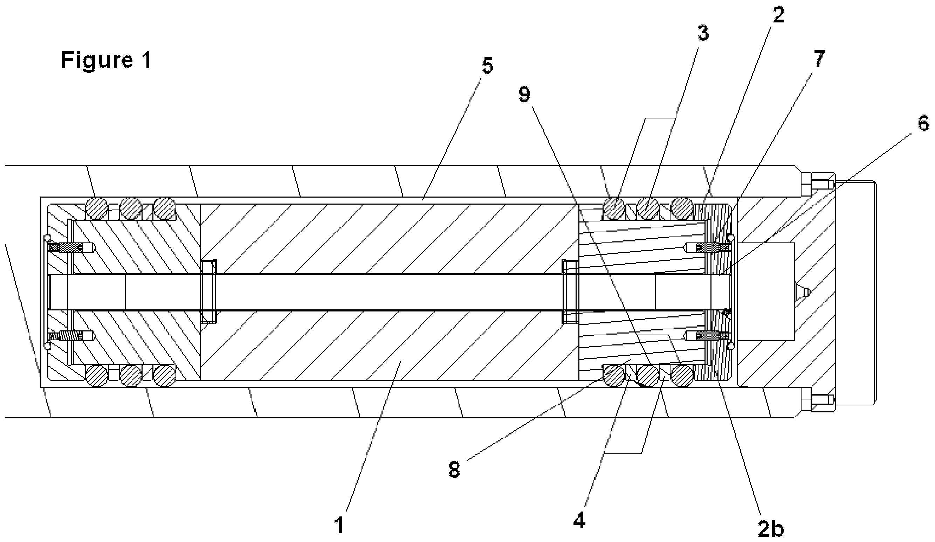

- la figure 1 se rapporte à une représentation schématique d'un exemple de système d'amortissement intégrant un élément axial mobile selon l'invention,

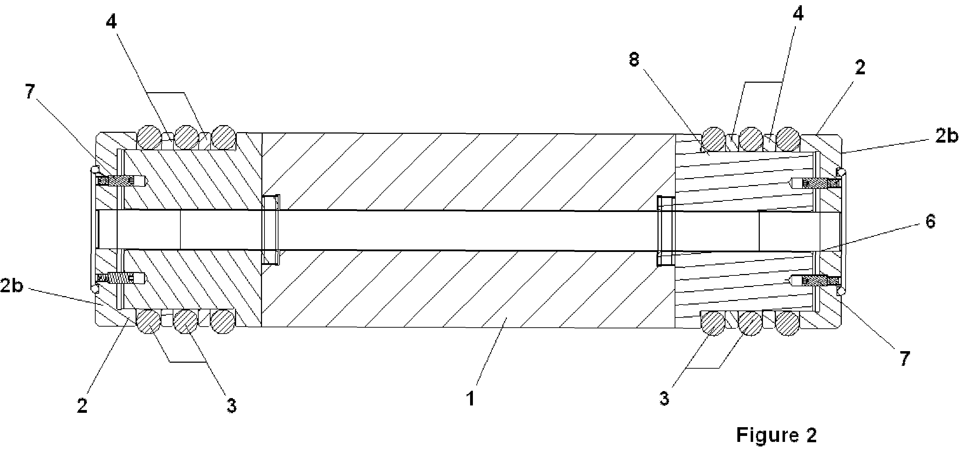

- la figure 2 se rapporte à un exemple schématisé d'un élément axial mobile selon l'invention comportant une masse absorbante.

La présente invention se rapporte à un élément axial mobile caractérisé par les caractéristiques de la revendication 1.

Lorsque l'élément axial mobile est positionné dans le logement 5 du système d'amortissement, la masse absorbante 1 de l'élément mobile présente une inertie suffisante pour réduire voire supprimer les vibrations radiales de l'outil associé au système d'amortissement. Selon une particularité non-limitative de l'invention, cette masse absorbante 1 peut être réalisée par, au moins en partie, un alliage de tungstène avec une répartition massique sur l'ensemble de cette masse qui peut être soit homogène, soit hétérogène. Selon un mode de réalisation préféré qui n'est pas limitatif de l'invention, l'élément mobile présente une section cylindrique arrangée pour être insérée dans le logement de section cylindrique du système d'amortissement.

Lorsque l'élément axial mobile est dans le logement 5, un ou plusieurs éléments élastiques 3 montés sur la périphérie de l'élément axial mobile et en appuie contre la paroi interne du logement 5 du système suspendent la masse absorbante 1 dans le logement 5 en positionnant cette masse 1 radialement, c'est-à-dire en centrant cette masse 1 dans le logement 5. La masse absorbante 1 couplée aux différents éléments élastiques 3 limitent et absorbent les vibrations. Cette absorption de vibrations est alors fonction de la rigidité des éléments élastiques 3 qui sont positionnés en contact entre, d'une part, axialement une gorge 9 de l'élément axial mobile et, d'autre part, radialement la paroi interne du logement 5 du système. Le contrôle de l'absorption est effectué en réglant la rigidité des éléments élastiques 3 et donc leur capacité d'amortissement. Ce réglage de la rigidité est alors opéré en générant une précontrainte plus ou moins importante sur ces éléments élastiques 3 lorsque l'élément mobile est au repos.

Plus la précontrainte exercée sur les éléments élastiques 3 au repos sera importante et plus la rigidité de ces éléments 3 augmentera, diminuant conjointement leur habilité à absorber des vibrations. De ce fait, la mobilité de l'élément axial mobile dans le logement 5 du système d'amortissement s'en trouve également réduite.

Dans le cadre de l'invention, le contrôle et le réglage de la précontrainte de l'élément élastique 3 est effectué par un dispositif intégré à l'élément axial mobile. Ce dispositif est notamment formé par la lèvre annulaire 2 qui permet une modification du volume de la gorge 9 dans laquelle l'élément élastique 3 est positionné. La modification de ce volume fait que l'élément élastique 3 supporte une précontrainte par compression. Le contrôle et la régulation du volume permet ainsi un contrôle et une régulation de la précontrainte sur l'élément élastique 3. La génération de la précontrainte contre l'élément élastique 3 est opérée par un déplacement axial rectiligne de la structure portant une lèvre annulaire 2 contre l'élément élastique 3. Cette précontrainte par déplacement axial et rectiligne permet de limiter, voire de supprimer, la génération de forces de cisaillement et de torsion entre la lèvre annulaire 2 et l'élément élastique 3.

Ainsi, l'amortisseur de l'invention comporte au moins un élément élastique 3 logé dans une gorge 9 de la périphérie de la masse absorbante 1 qui comprend :
- un fond réalisé par un épaulement 8 de la masse absorbante 1,
- un bord réalisé par une lèvre annulaire 2 montée coulissante sur au moins une partie de l'épaulement 8 selon au moins un axe de l'élément mobile pour réaliser un dispositif de réglage et de contrôle d'une précontrainte exercée sur l'élément élastique 3 monté sur la périphérie de la masse absorbante 1.

Le fond de la gorge 9 annulaire qui réalise le logement dans lequel l'élément élastique 3 se positionne, est formé par la périphérie de la masse absorbante 1 au niveau d'un épaulement 8 de l'élément mobile. Un des bords de cette gorge 9 annulaire est alors formé par une lèvre annulaire 2 montée mobile en translation sur la surface de l'épaulement 8 de l'élément mobile. Afin de pouvoir coulisser au niveau de cet épaulement 8, la lèvre annulaire 2 présente un diamètre intérieur sensiblement identique, ou légèrement supérieur, au diamètre de la section de l'épaulement 8 de l'élément mobile. Il convient de noter que cette lèvre annulaire 2 peut être portée par une structure qui entoure, emmanche ou encapuchonne une extrémité de la masse absorbante 1 de l'élément mobile pour être mobile en translation selon l'axe de cette masse absorbante 1. Le déplacement de cette lèvre annulaire 2 permet un déplacement d'un bord de la gorge 9 annulaire, et, en élargissant ou diminuant le volume de la gorge 9 annulaire, génère ou modifie la précontrainte exercée sur l'élément élastique 3.

Selon une particularité de réalisation non-limitative de l'invention, l'élément axial comprend plusieurs gorges 9 logeant chacune un élément élastique 3 respectif, les gorges 9 étant formées avec des largeurs variables le long d'une portion de l'épaulement 8 de la masse absorbante 1, avec au moins un bord mobile réalisé par une rondelle 4 coulissante séparant deux gorges 9 juxtaposées, la rondelle 4 coulissante présente des dimensions intérieures correspondant aux dimensions de l'épaulement 8 de la portion de masse absorbante 1.

Cette particularité de réalisation permet, au niveau d'une même portion de longueur de l'épaulement 8, de positionner plusieurs gorges 9 annulaires juxtaposée, chacune d'entre elle étant équipée d'un élément élastique 3 respectif. Ces différentes gorges 9 sont alors séparées entre elles par des rondelles coulissantes 4 qui forment ainsi des parois partagées par deux gorges 9 consécutives. Dans une succession de gorges juxtaposées, seules les gorges situées aux extrémités présentent un de leurs bords ou parois formé par un élément autre qu'une rondelle 4 coulissante. Ainsi, la gorge 9 la plus proche d'une extrémité de la masse absorbante 1 comporte, d'une part, un bord formé par une rondelle 4 coulissante et, d'autre part, un bord formé par la lèvre annulaire 2. De même, la gorge 9 la plus éloignée de cette lèvre 2 présente, d'une part, un bord formé par une rondelle 4 coulissante et, d'autre part, un bord, le plus éloigné de cette lèvre 2, formé par l'épaulement 8, c'est à dire la différence de diamètre entre la section sur laquelle coulissent les rondelles 4 et les éléments élastiques 3 et la section de diamètre non-réduit de la masse absorbante de l'élément mobile. Ce bord formé par l'épaulement 8 réalise une butée contre laquelle les éléments élastiques 3 logés dans les gorges 9 et les rondelles 4 qui les séparent, coulissent en étant pressés par la lèvre annulaire 2 en translation. Ce mode particulier de réalisation, grâce au coulissement des éléments élastiques 3 et rondelles 4, permet une répartition homogène de la contrainte exercée par la lèvre annulaire 2 sur les différents éléments élastiques 3.

Selon un mode de réalisation préféré non-limitatif de l'invention, la lèvre annulaire 2 est solidaire en translation selon l'axe de la masse absorbante 1 avec une structure de serrage 6 réalisant une interaction axiale, d'une part, avec une portion de la masse absorbante 1 et, d'autre part, directement ou indirectement, avec la structure portant la lèvre annulaire 2. Ce type de construction permet ainsi un réglage de la contrainte exercée par la lèvre annulaire 2 sur les éléments élastiques 3 par une simple opération de vissage/dévissage.

Selon une première variante de réalisation, la lèvre annulaire 2 interagit directement par une interaction filetage/taraudage avec une surface de la masse absorbante 1. Par exemple, la face intérieure de la lèvre annulaire 3 peut présenter un taraudage qui coopère avec un filetage porté par la surface périphérique de l'épaulement 8 de la masse absorbante 1. Alternativement, la lèvre annulaire 2 peut être montée ou intégrée à une structure, elle-même montée sur une extrémité de la masse absorbante 1 et comprenant un axe fileté qui interagit avec un orifice taraudé de la masse absorbante 1.

Selon une seconde variante de réalisation, la structure de serrage 6 est réalisée par une tige filetée équipée d'une butée limitant le déplacement de la lèvre annulaire 2 selon l'axe de translation, cette butée interagissant avec un orifice taraudé disposé à une extrémité de la masse absorbante 1, la structure de serrage 6 étant également équipée d'une interface d'actionnement. Un tel arrangement permet d'opérer un coulissement contrôlé de la lèvre annulaire 2, la butée limitant le déplacement de la lèvre annulaire 2 en réaction à la compression des éléments élastiques 4, sans que la rotation de la tige filetée ne soit imposée à cette lèvre 2. Selon un mode de réalisation préféré, la butée empêche ainsi la lèvre annulaire 2 de glisser hors de l'élément axial mobile. Cette butée permet également d'appuyer la lèvre annulaire 2 contre les éléments élastiques 3 et d'imposer la contrainte générée par le vissage de la tige filetée.

Selon une particularité de réalisation non-limitative de l'invention, la lèvre annulaire 2 est montée coulissante en translation et bloquée en rotation par rapport à la masse absorbante 1 grâce à au moins un élément axial de guidage 7 comprenant une première partie insérée dans un orifice à une extrémité de la masse absorbante 1 et/ou une seconde partie insérée dans un orifice adapté de la structure 2b portant la lèvre annulaire 2. Préférentiellement, cet axe de guidage 7 est décentré par rapport à l'axe de l'élément mobile.

Selon un mode de réalisation préféré, l'élément axial de l'invention comprend des éléments élastiques 3 positionnés sur la périphérie au niveau de parties de la masse absorbante 1 située à chaque extrémité de la masse absorbante 1 et dont la précontrainte est réglée/contrôlée par des dispositifs de réglage et de contrôle respectifs arrangés symétriquement. L'élément axial mobile présente ainsi un arrangement symétrique selon un plan perpendiculaire à l'axe de l'élément mobile.

Selon un premier exemple de ce mode de réalisation préféré, un tel arrangement permet de disposer des dispositifs de contrôle et de réglage de groupes d'éléments élastiques 3 positionnés au niveau de chacune des extrémités de l'élément axial. Cet arrangement permet d'obtenir un réglage différent de chacun des groupes d'éléments élastiques 3 et donc d'imposer des absorptions de vibrations différentes sur la longueur de l'élément axial mobile.

Selon un second exemple de ce mode de réalisation préféré, les dispositifs de serrage et de réglage sont actionnés conjointement par une structure de serrage 6 commune. Pour ce faire, des lèvres annulaires 2 sont disposées symétriquement, de même que des éléments élastiques 3 ainsi que des rondelles 4 formant des parois de séparation des éléments élastiques 3. Cependant, la structure de serrage 6 est commune et actionnée au niveau d'une interface unique. Un exemple de réalisation de cet actionnement commun des lèvres annulaires 2 positionnées à chacune des extrémités de l'élément axial mobile est une structure de serrage 6 réalisée en deux parties rectilignes pour former une tige, chacune des parties présentant, à une première extrémité, une butée pour interagir, directement ou indirectement, avec une lèvre annulaire 2 respective et, à une seconde extrémité, une interface pour permettre une interaction axiale, par exemple filetage-taraudage, avec l'autre partie rectiligne de la structure de serrage 6. Cette structure de serrage 6 est arrangée pour former un élément axial qui traverse la masse absorbante 1 au niveau de son axe, les deux parties de la tige enserrant par leurs butées les lèvres annulaires 2 avec la masse absorbante 1, et se rejoignent au niveau de leurs secondes extrémités respectives. Au niveau de cette seconde extrémité, une première des deux parties comporte un filetage pour coopérer avec un taraudage porté par l'extrémité correspondante de la seconde des parties de tige de serrage. Une première des deux parties est alors montée fixe en rotation et libre en translation avec la masse absorbante 1, tandis que la seconde des parties est montée libre en rotation et en translation. La rotation axiale de la seconde partie de tige de serrage par rapport à la première partie de tige entraîne une modification de la longueur de la tige et conjointement un rapprochement ou un écartement des lèvres annulaires 2, l'une par rapport à l'autre. Le rapprochement ou l'écartement simultané des lèvres annulaires 2 qui coulissent sur la surface de l'épaulement 8 génère une précontrainte homogène au niveau des différents éléments élastiques 3 et des rondelles 4 qui les séparent. Selon une particularité préférée de réalisation, la seconde partie de tige de serrage, libre en rotation et en translation par rapport à la masse absorbante 1, porte une interface d'actionnement.

Selon un mode de réalisation particulier complémentaire mais non-limitatif de l'invention, le dispositif de réglage de l'élément de axial intègre un mécanisme d'indexage de la précontrainte exercée par la lèvre annulaire 2 sur l'élément élastique 3. Un exemple non-limitatif de mécanisme d'indexage peut consister en une graduation marquée sur la structure 2b qui porte la lèvre annulaire 2 en regard de laquelle un indicateur marqué à une extrémité de la structure de serrage 6 se déplace conjointement au pivotement axial de la structure de serrage 6.

L'invention porte également un système d'amortissement de vibrations radiales pour outil monté mobile en rotation sur une machine, le système étant formé par un cylindre creux formant un logement axial, caractérisé en ce qu'il intègre dans son logement 5 un élément axial mobile selon l'invention.

Selon un particularité de réalisation, le système d'amortissement de vibrations est caractérisé en ce qu'une extrémité du logement 5 comprend une ouverture permettant d'accéder à une interface d'actionnement d'au moins un dispositif de réglage et de contrôle de l'élasticité d'au moins un élément élastique 3 monté sur la périphérie de la masse absorbante 1 de l'élément mobile. Cet arrangement permet un réglage de l'amortissement de l'élément mobile directement depuis l'extérieur du logement 5, sans qu'il n'y ait besoin de sortir l'élément mobile du logement 5. De plus, cet actionnement peut être opéré depuis un orifice dans la structure qui forme le logement 5 et qui se trouve positionné en regard de l'interface d'actionnement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Elément axial mobile pour système d'amortissement comprenant une masse absorbante (1) rectiligne formant l'élément principal d'absorption de l'élément axial, cette masse absorbante (1) étant destinée à être positionnée dans un logement (5) et comportant au moins une gorge (9) annulaire disposée sur la périphérie de la masse absorbante (1) et dans laquelle est disposé au moins un élément élastique (3) destiné à être en appui contre la paroi interne du logement (5), au moins une gorge (9) de la périphérie de la masse absorbante (1) comprenant un fond réalisé par un épaulement (8) de la masse absorbante (1),
**caractérisé en ce que** l'au moins une gorge (9) comprend également un bord réalisé par une structure portant une lèvre annulaire (2) montée coulissante sur au moins une partie de l'épaulement (8) selon au moins un axe de l'élément mobile pour réaliser un dispositif de réglage intégré à l'élément mobile pour permettre le contrôle d'une précontrainte exercée par la lèvre annulaire (2) sur l'élément élastique (3) monté sur la périphérie de la masse absorbante (1), la précontrainte étant générée sans rotation de la lèvre annulaire (2) par rapport à l'élément élastique (3).

2. Elément axial selon la revendication 1, **caractérisé en ce que** l'élément axial comprend plusieurs gorges (9) logeant chacune un élément élastique (3) respectif, les gorges (9) étant formées avec des largeurs variables le long d'une portion de l'épaulement (8) de la masse absorbante (1), avec au moins un bord mobile réalisé par une rondelle (4) coulissante séparant deux gorges (9) juxtaposées, la rondelle (4) coulissante présente des dimensions intérieures correspondant aux dimensions de l'épaulement (8) de la portion de masse absorbante (1).

3. Elément axial selon une des revendications 1 ou 2, **caractérisé en ce que** la lèvre annulaire (2) est solidaire en translation selon l'axe de la masse absorbante (1) avec une structure de serrage (6) réalisant une interaction axiale, d'une part, avec une portion de la masse absorbante (1) et, d'autre part, directement ou indirectement, avec la structure portant la lèvre annulaire (2).

4. Elément axial selon la revendication 3, **caractérisé en ce que** la structure de serrage (6) est réalisée par une tige filetée équipée d'une butée limitant le déplacement de la lèvre annulaire (2) selon l'axe de translation et interagissant avec un orifice taraudé disposé à une extrémité de la masse absorbante (1), la structure de serrage (6) étant également équipée d'une interface d'actionnement.

5. Elément axial selon une des revendications 1 à 4, **caractérisé en ce que** la lèvre annulaire (2) est montée coulissante en translation et bloquée en rotation par rapport à la masse absorbante (1) grâce à au moins un élément axial de guidage (7) comprenant une première partie insérée dans un orifice à une extrémité de la masse absorbante (1) et/ou une seconde partie insérée dans un orifice adapté de la structure (2b) portant la lèvre annulaire (2).

6. Elément axial selon une des revendications précédentes, **caractérisé en ce que** l'élément axial comprend des éléments élastiques (3) positionnés sur la périphérie au niveau de parties de la masse absorbante (1) située à chaque extrémité de la masse absorbante (1) et dont la précontrainte est réglée/contrôlée par des dispositifs de réglage et de contrôle respectifs arrangés symétriquement.

7. Elément axial selon une des revendications 1 à 2 et 5 ou 6, **caractérisé en ce que** les dispositifs de serrage et de réglage sont actionnés conjointement par une structure de serrage (6) commune.

8. Elément axial selon une des revendications précédentes, **caractérisée en ce que** le dispositif de réglage intègre un mécanisme d'indexage de la précontrainte exercée par la lèvre annulaire (2) sur l'élément élastique (3).

9. Système d'amortissement de vibrations radiales pour outil de tournage, perçage, fraisage ou d'usinage monté sur machine, outil mobile en rotation par rapport à la pièce usinée, le système comportant un cylindre creux formant un logement (5) axial, **caractérisé en ce que** le système intègre dans son logement (5) un élément axial mobile selon une des revendications 1 à 8.

10. Système d'amortissement de vibrations selon la revendication 9, **caractérisé en ce qu'**une extrémité du logement (5) comprend une ouverture permettant d'accéder à une interface d'actionnement d'au moins un dispositif de réglage et de contrôle d'une précontrainte exercée sur au moins un élément élastique (3) monté sur la périphérie de la masse absorbante (1) de l'élément mobile.

## Patentansprüche

1. Bewegliches axiales Element für ein Dämpfungssystem, eine geradlinige absorbierende Masse (1) umfassend, die das Hauptabsorptionsteil des axialen Elements bildet, wobei diese absorbierende Masse (1) dazu bestimmt ist, in einer Aufnahme (5) angeordnet zu werden und mindestens eine ringförmige Hohlkehle (9) aufweist, die auf dem Umfang der absorbierenden Masse (1) angeordnet ist, und in der mindestens ein elastisches Teil (3) angeordnet ist, das dazu bestimmt ist, an der Innenwand der Aufnahme (5) anzuliegen, wobei mindestens eine Hohlkehle (9) des Umfangs der absorbierenden Masse (1) umfasst:
- einen durch eine Schulter (8) der absorbierenden Masse (1) gebildeten Boden,
**dadurch gekennzeichnet, dass** die mindestens eine Hohlkehle (9) ebenfalls
- einen Rand aufweist, der durch eine Anordnung gebildet wird, die eine ringförmige Lippe (2) trägt, die auf mindestens einem Teil der Schulter (8) längs mindestens einer Achse des beweglichen Elementes gleitend montiert ist, um eine Regelvorrichtung zu schaffen, die dem beweglichen Element eingefügt ist, um die Einstellung einer Vorspannkraft zu erlauben, die von der ringförmigen Lippe (2) auf das elastische Teil (3) ausgeübt wird, das auf dem Umfang der absorbierenden Masse (1) montiert ist, wobei die Vorspannkraft ohne Rotation der ringförmigen Lippe (2) relativ zum elastischen Teil (3) erzeugt wird.

2. Bewegliches axiales Element nach Patentanspruch 1, **dadurch gekennzeichnet, dass** das bewegliche axiale Element mehrere Hohlkehlen (9) umfasst, die jeweils ein zugehöriges elastisches Teil (3) aufnehmen, wobei die Hohlkehlen (9) mit verschiedenen Breiten über einen Abschnitt der Schulter (8) der absorbierenden Masse (1) ausgebildet sind, mit mindestens einem beweglichen Rand, der in einem gleitenden Ring (4) besteht, der zwei benachbarte Hohlkehlen (9) trennt, wobei der gleitende Ring (4) Innenabmessungen aufweist, die den Abmessungen der Schulter (8) des Abschnittes der absorbierenden Masse (1) entspricht.

3. Bewegliches axiales Element nach einem der Patentansprüche 1 oder 2, **dadurch gekennzeichnet, dass** die ringförmige Lippe (2) für gemeinsame Translationsbewegungen längs der Achse der absorbierenden Masse (1) mit einer Klemmanordnung (6) verbunden ist, die ein axiales Zusammenwirken einerseits mit einem Abschnitt der absorbierenden Masse (1) und andererseits direkt oder indirekt mit der Anordnung bewirkt, die die ringförmige Lippe (2) trägt.

4. Bewegliches axiales Element nach Patentanspruch 3, **dadurch gekennzeichnet, dass** die Klemmanordnung (6) in einer Gewindestange besteht, die mit einem Anschlag versehen ist, der die Verschiebung der ringförmigen Lippe (2) längs der Translationsachse begrenzt und mit einer innengewindeten Öffnung zusammenwirkt, die an einem Ende der absorbierenden Masse (1) angeordnet ist, wobei die Klemmanordnung (6) ebenfalls mit einer Betätigungsschnittstelle ausgestattet ist.

5. Bewegliches axiales Element nach einem der Patentansprüche 1 bis 4, **dadurch gekennzeichnet, dass** die ringförmige Lippe (2) mit Hilfe mindestens eines axialen Führungsmittels (7), das einen ersten, in eine Öffnung an einem Ende der absorbierenden Masse (1) eingesetzten Teil und/oder einen zweiten, in eine entsprechend ausgelegte Öffnung der Anordnung (2b), die die ringförmige Lippe (2) trägt, eingesetzten Teil umfasst, für Translationsbewegungen gleitend montiert und gegen Drehungen relativ zur absorbierenden Masse (1) gesperrt ist.

6. Bewegliches axiales Element nach einem der vorangehenden Patentansprüche, **dadurch gekennzeichnet, dass** das axiale Element elastische Teile (3) umfasst, die auf dem Umfang in Höhe von Abschnitten der absorbierenden Masse (1) angeordnet sind, die sich an jedem Ende der absorbierenden Masse (1) befinden und deren Vorspannkraft durch jeweilige, symmetrisch angeordnete Regel- und Einstellmittel reguliert/eingestellt wird.

7. Bewegliches axiales Element nach einem der Patentansprüche 1 bis 2 und 5 oder 6, **dadurch gekennzeichnet, dass** die Klemm- und Regelvorrichtungen zusammen durch eine gemeinsame Klemmanordnung (6) betätigt werden.

8. Bewegliches axiales Element nach einem der vorangehenden Patentansprüche, **dadurch gekennzeichnet, dass** die Regelvorrichtung einen Indexiermechanismus für die Vorspannkraft umfasst, die von der ringförmigen Lippe (2) auf das elastische Teil (3) ausgeübt wird.

9. System zur Dämpfung radialer Vibrationen für ein auf eine Maschine montiertes Dreh-, Bohr, Fräs- oder Bearbeitungswerkzeug, das relativ zum bearbeiteten Werkstück rotationsbeweglich ist, wobei das System einen Hohlzylinder umfasst, der eine axiale Aufnahme (5) bildet, **dadurch gekennzeichnet, dass** das System in seiner Aufnahme (5) ein bewegliches axiales Elementnach einem der Patentansprüche 1 bis 8 aufweist.

10. System zur Dämpfung von Vibrationen nach Patentanspruch 9, **dadurch gekennzeichnet, dass** ein Ende der Aufnahme (5) eine Öffnung aufweist, die den Zugang zu einer Betätigungsschnittstelle mindestens einer Regel- und Einstellvorrichtung für eine Vorspannkraft gewährt, die auf mindestens ein elastisches Teil (3) ausgeübt wird, das auf dem Umfang der absorbierenden Masse (1) des beweglichen Elementes montiert ist.

## Claims

1. Mobile axial element for a damping system, comprising a straight absorbing mass (1) forming the main absorption element of the axial element, this absorbing mass (1) being designed to be positioned in a housing (5) and comprising at least one annular channel (9) arranged on the periphery of the absorbing mass (1) and in which there is arranged at least one elastic element (3) designed to press against the internal wall of the housing (5), at least one channel (9) of the periphery of the absorbing mass (1) comprising a bottom created by a shoulder (8) of the absorbing mass (1), **characterized in that** the at least one channel (9) also comprises a rim created by a structure bearing an annular lip (2) that is mounted so as to be able to slide on at least part of the shoulder (8) along at least one axis of the mobile element so as to create an adjustment device integrated into the mobile element so as to permit control of a preload exerted by the annular lip (2) on the elastic element (3) mounted on the periphery of the absorbing mass (1), the preload being generated without rotation of the annular lip (2) relative to the elastic element (3).

2. Axial element according to Claim 1, **characterized in that** the axial element comprises multiple channels (9), each housing a respective elastic element (3), the channels (9) being formed with variable widths along a portion of the shoulder (8) of the absorbing mass (1), with at least one mobile rim created by a sliding washer (4) separating two juxtaposed channels (9), the sliding washer (4) has internal dimensions corresponding to the dimensions of the shoulder (8) of the portion of the absorbing mass (1).

3. Axial element according to either of Claims 1 and 2, **characterized in that** the annular lip (2) translates as one, along the axis of the absorbing mass (1), with a clamping structure (6) establishing an axial interaction on one hand with a portion of the absorbing mass (1) and on the other hand, directly or indirectly, with the structure bearing the annular lip (2).

4. Axial element according to Claim 3, **characterized in that** the clamping structure (6) consists of a threaded rod equipped with a stop limiting the displacement of the annular lip (2) along the axis of translation and interacting with a tapped orifice arranged at one end of the absorbing mass (1), the clamping structure (6) also being equipped with an actuation interface.

5. Axial element according to one of Claims 1 to 4, **characterized in that** the annular lip (2) is mounted so as to be able to slide in translation and immobilized in rotation relative to the absorbing mass (1) by means of at least one axial guiding element (7) comprising a first part inserted into an orifice at one end of the absorbing mass (1) and/or a second part inserted into a suitable orifice of the structure (2b) bearing the annular lip (2).

6. Axial element according to one of the preceding claims, **characterized in that** the axial element comprises elastic elements (3) positioned on the periphery at the level of parts of the absorbing mass (1) located at each end of the absorbing mass (1) the preload is adjusted/controlled by symmetrically arranged respective adjustment and control devices.

7. Axial element according to one of Claims 1 to 2 and 5 or 6, **characterized in that** the clamping and adjustment devices are actuated conjointly by a common clamping structure (6).

8. Axial element according to one of the preceding claims, **characterized in that** the adjustment device includes a mechanism for indexing the preload exerted by the annular lip (2) on the elastic element (3).

9. Radial vibration damping system for a turning, drilling, milling or machining tool mounted on a machine, this tool being mobile in rotation relative to the machined item, the system comprising a hollow cylinder forming an axial housing (5), **characterized in that** the system includes, in its housing (5), a mobile axial element according to one of Claims 1 to 8.

10. Vibration damping system according to Claim 9, **characterized in that** an end of the housing (5) comprises an opening allowing access to an actuation interface of at least one device for adjusting and controlling a preload exerted on at least one elastic element (3) mounted on the periphery of the absorbing mass (1) of the mobile element.
